# EUROPÄISCHE PATENTSCHRIFT

(11) **EP 1 538 345 B1**
(45) Veröffentlichungstag und Bekanntmachung des Hinweises auf die Patenterteilung: **22.11.2006**
(21) Anmeldenummer: 04106199.5
(22) Anmeldetag: 01.12.2004
(51) Int. Cl.: F16B 5/00

(54) **Bau-Hilfselement**
Auxiliary construction element
Elément auxiliaire de construction

(30) Priorität: 01.12.2003 DE 10356030
(43) Veröffentlichungstag der Anmeldung: 08.06.2005
(73) Patentinhaber: HILTI Aktiengesellschaft, 9494 Schaan (LI)
(72) Erfinder: Miescher, Stefan, 9494, Schaan (LI); Maglione, Mariana, 9473, Gams (CH)
(74) Vertreter: Wildi, Roland

(56) Entgegenhaltungen:
- EP-A- 0 420 797
- EP-A- 0 875 643
- DE-A1- 10 158 435
- FR-A- 2 786 541

## Beschreibung

Die vorliegende Erfindung betrifft ein Bau-Hilfselement der im Oberbegriff des Patentanspruchs 1 genannten Art.

Derartige Bau-Hilfselemente sind z. B. als Schalungsanschläge, Kabelbefestiger oder Rohrschellen ausgebildet, die über mit Setzgeräten setzbaren Nägeln, Stiften oder etc. an einem Bauteil bzw. einem Untergrund festlegbar sind. Die Bau-Hilfselemente weisen dabei zum Teil einen Halteabschnitt auf, über den sie an der Mündung des Laufes eines Setzgerätes ansteckbar sind.

Bei einem als Schalungsanschlag ausgebildetem Bau-Hilfselement Hilti X-FS ist es bekannt, das Widerlager für ein Befestigungselement hülsenförmig auszubilden und als Halteabschnitt auszugestalten. Dazu überragt das hülsenförmige Widerlager bzw. die Hülse einen Boden des Schalungsanschlags und ist auf ihrer Mantelfläche mit, im Wesentlichen koaxial zur Längsachse der Hülse verlaufenden Rippen versehen. Mittels des Halteabschnitts ist der Schalungsanschlag vor einem Setzvorgang an der Mündung eines Setzgerätes festlegbar, indem die Hülse mit den Rippen in die Öffnung der Mündung eingesteckt wird.

Von Nachteil hierbei ist, dass das Bau-Hilfselement mit seinem Halteabschnitt jeweils nur in eine Mündung mit bestimmtem Innendurchmesser bzw. bestimmter Öffnungsweite einsteck- und dort festlegbar ist. Für Setzgeräte verschiedenen Kalibers müssen daher Bau-Hilfselemente mit verschieden bemassten Halteabschnitten vorgesehen werden, was aufwendig und teuer ist.

Aus der EP 0 420 797 A2 ist ein Anschlagkörper zum seitlichen Abstützen von Betonschalungen bekannt, der einstückig mit einer Knautschzone in Form einer stauchbaren Hülse verbunden ist, an die sich ein Widerlager anschließt. Die Hülse sitzt dabei auf einem nabenartigen Innenteil des Anschlagkörpers, das durch ein Bodenteil mit einem im Wesentlichen hohlzylindrischen Mantelteil verbunden ist.

Die Aufgabe der vorliegenden Erfindung liegt darin, Bau-Hilfselemente der oben genannten Art bereitzustellen, die die oben genannten Nachteile vermeiden und die in einfacher und sicherer Weise an der Mündung eines Setzgerätes festlegbar sind. Dieses wird erfindungs-gemäss durch die in Anspruch 1 genannten Massnahmen erreicht, wie nachfolgend gezeigt wird.

Die Besonderheit der vorliegenden Erfindung liegt darin, einen ersten und wenigstens einen weiteren Halteabschnitt am Bau-Hilfselement vorzusehen, von denen der oder jeder weitere Halteabschnitt von dem ersten Halteabschnitt in radialer Richtung beabstandet ist. Durch diese Massnahme wird es ermöglicht, das Bau-Hilfselement an Setzgeräten mit deutlich verschiedenen Innendurchmessern oder Geometrien der Mündungsöffnungen temporär zu fixieren. Es kann dabei ein Klemmsitz durch Einstecken in die Mündungsöffnung oder durch Aufstecken auf die Mündung erzielt werden.

Günstig kann es ferner sein, wenn der erste Halteabschnitt den zweiten Halteabschnitt in einer Richtung, die im Wesentlichen parallel zur Längsachse der Durchtrittsöffnung liegt, überragt. Durch diese Massnahme wird es vermieden, dass der weitere Halteabschnitt störend wirkt, wenn der erste Halteabschnitt zur Fixierung an einem Setzgerät mit entsprechender Geometrie bzw. entsprechendem Innendurchmesser der Mündungsöffnung genutzt wird.

Vorteilhafterweise ist der erste Halteabschnitt dabei in der Richtung, die im Wesentlichen parallel zur Längsachse der Durchtrittsöffnung liegt, mindestens 1,5 mal länger als der zweite Halteabschnitt, wodurch eine ausreichende Überdeckung des ersten Halteabschnitts mit der Mündungsöffnung und damit ein sicheres Einstecken und Fixieren des ersten Halteabschnitts in der Mündungsöffnung eines Setzgerätes möglich ist.

Produktionstechnisch vorteilhaft ist es dabei, wenn der erste Halteabschnitt an der äusseren Umfangsfläche des Hülsenteils angeordnet ist.

Um kleinere Unterschiede in der Öffnungsweite bzw. dem Innendurchmesser der Mündungsöffnung auszugleichen, weist der erste Halteabschnitt günstigerweise Rippen auf, die im Wesentlichen parallel zur Längsachse der Durchtrittsöffnung verlaufen und an der Umfangsfläche des Hülsenteils angeordnet sind. Diese Rippen können dabei eine gewisse Federelastizität aufweisen.

Weiterhin vorteilhaft ist es, wenn der oder jeder weitere Halteabschnitt im Wesentlichen ringförmig ausgebildet ist. Hierdurch kann das Bau-Hilfselement auch bei einer Fixierung über das oder die weiteren Halteabschnitte drehbar und ohne bevorzugte Orientierung auf die Mündung des Setzgerätes aufgesteckt werden.

Günstig ist es ebenfalls, wenn der oder jeder weitere Halteabschnitt aus mehreren Segmenten besteht. Hierdurch ist eine grösstmögliche Flexibilität des oder der weiteren Halteabschnitte gewährleistet. Die Bau-Hilfselemente können auch an unrunden Mündungsöffnungen fixiert werden.

Sind radial aussen und/oder innen an dem oder den weiteren Halteabschnitten Rippen angeordnet, dann können auch hier kleinere Unterschiede in der Öffnungsweite bzw. dem Innendurchmesser der Mündungsöffnung ausgeglichen werden. Die Rippen können dabei federelastisch ausgebildet sein.

Vorteilhaferweise beinhalten die weiteren Halteabschnitte wenigstens einen zweiten und einen dritten Halteabschnitt, wobei der dritte Halteabschnitt von dem zweiten Halteabschnitt radial beabstandet ist. Durch diese Massnahme wird die Palette der Mündungsöffnungen und Setzgeräte auf die das erfindungsgemässe Bau-Hilfselement aufsteckbar ist noch erweitert.

Weitere Vorteile und Massnahmen der Erfindung ergeben sich aus den Unteransprüchen, der nachfolgenden Beschreibung und den Zeichnungen. In den Zeichnungen ist die Erfindung in mehreren Ausführungsbeispielen dargestellt.

Es zeigen:
- Fig. 1: ein, als Kabelbefestiger ausgebildetes erfindungsgemässes Bau-Hilfselement in perspektivischer Ansicht,
- Fig. 2: das Bau-Hilfselement aus Fig. 1 an einer Mündung eines Setzgerätes in perspektivischer Ansicht,
- Fig. 3: das Bau-Hilfselement aus Fig. 1 an einer Mündung eines weiteren Setzgerätes in einer Schnittansicht,
- Fig. 4: ein weiteres, als Kabelbefestiger ausgebildetes erfindungsgemässes BauHilfselement in perspektivischer Ansicht,
- Fig. 5: das Bau-Hilfselement aus Fig. 4 an einer Mündung eines Setzgerätes in perspektivischer Ansicht.

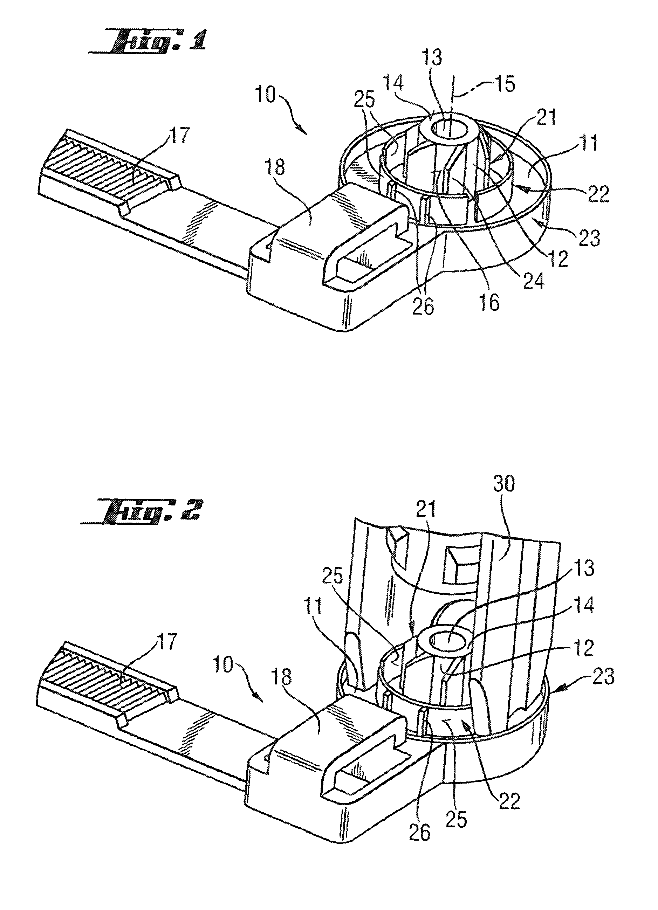

In den Fig. 1 bis 3 ist ein als Kabelbefestiger bzw. Kabelbinder ausgebildetes erfindungsgemässes Bau-Hilfselement 10 in einer ersten Variante dargestellt. Das Bau-Hilfselement 10 weist ein Basisteil 11 auf, an dem zur Kabelbefestigung seitlich ein Zahnband 17 angeordnet ist, das in ein Schloss 18 einführbar und dort festlegbar ist.

Von dem Basisteil 11 erhebt sich ferner ein Hülsenteil 12 das eine Durchtrittsöffnung 13 aufweist, durch die zur Befestigung des Bau-Hilfselementes 10 an einem Untergrund ein Befestigungselement hindurchgeführt werden kann. Das Hülsenteil 12 weist ferner ein Widerlager 14 auf, an dem im befestigten Zustand des Bau-Hilfselementes 10 das Befestigungselement z. B. mit einer Kopfunterfläche angreift. An einer äusseren Umfangsfläche 16 des Hülsenteils 12 sind Rippen 24 angeordnet, die im Wesentlichen parallel zu einer Längsachse 15 des Hülsenteils 12 verlaufen. Die äussere Umfangsfläche 16 und die Rippen 24 bilden einen ersten Halteabschnitt 21 des Bau-Hilfselementes 10. Dieser Halteabschnitt 21 steht in Richtung der Längsachse 15 weiter von dem Basisteil 11 ab, bzw. ist axial höher, als ein ringförmiger zweiter Halteabschnitt 22, der radial beabstandet von dem ersten Halteabschnitt 21 und im Wesentlichen konzentrisch zu diesem und zur Längsachse 15 von dem Basisteil 11 aufragt. Dieser Halteabschnitt 22 weist mehrere, als Kreiswandabschnitte ausgebildete Segmente 25 auf, an denen radial aussen Rippen 26 angeordnet sind, die koaxial zur Längsachse 15 verlaufen. Randlich am Basisteil 11 ist ferner noch ein ringförmiger dritter Halteabschnitt 23 angeordnet, der durch eine ringförmige Wand gebildet wird. Die Höhe des dritten Halteabschnitts 23 über dem Basisteil 11 ist dabei etwas geringer als die des zweiten Halteabschnitts 22. Die Halteabschnitte 21, 22, 23 ragen also alle in einem bestimmten Abstand voneinander vom Basisteil 11 bzw. dem durch dieses gebildeten Boden ab.

In Fig. 2 ist das Bau-Hilfselement 10 auf eine Mündung 30 eines Setzgerätes aufgesteckt. Wie ersichtlich, wird das Bau-Hilfselement 10 dort über den zweiten Halteabschnitt 22 und den dritten Halteabschnitt 23 gehalten. Der zweite Halteabschnitt 22 greift dabei innen an der Öffnung der Mündung 30 an, während der dritte Halteabschnitt 23 aussen an der Mündung 30 angreift.

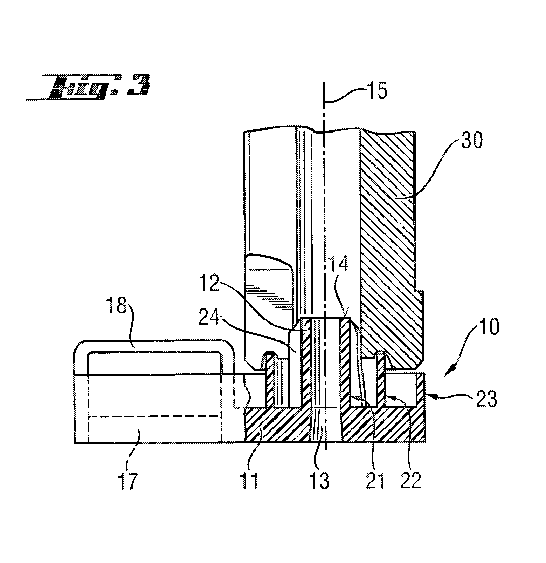

In Fig. 3 ist das Bau-Hilfselement 10 auf eine Mündung 30 eines weiteren Setzgerätes aufgesteckt. Das Bau-Hilfselement 10 ist dort über den ersten Halteabschnitt 21 gehalten, der in die Öffnung der Mündung 30 eingesteckt ist. Der zweite Halteabschnitt 22 begrenzt dabei die Einstecktiefe des Bau-Hilfselementes 10 und liegt mit seiner Kopffläche teilweise an der Mündung 30 an.

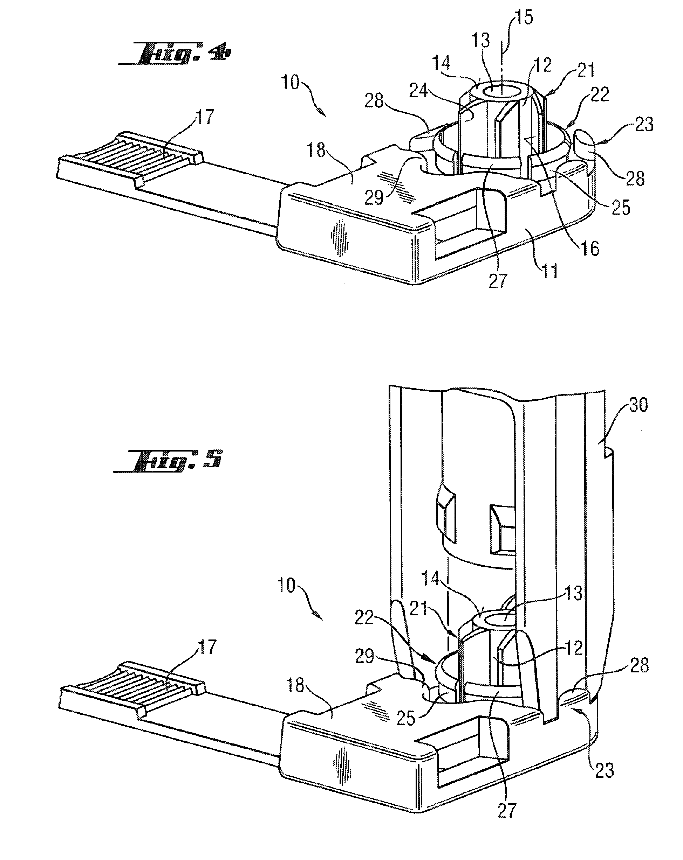

Das in den Figuren 4 und 5 dargestellte Bau-Hilfselement 10 unterscheidet sich im Wesentlichen dadurch von dem in den Figuren 1 bis 3 dargestellten, dass die Halteabschnitte 22 und 23 etwas anders ausgebildet sind. Der zweite Halteabschnitt 22 weist als Wandabschnitte ausgebildete Segmente 25 auf, die im Bereich des vom Basisteil 11 wegweisenden Randes an der Aussenfläche konzentrisch zur Längsachse verlaufende Rippen 27 bzw. Wülste aufweisen. Der dritte Halteabschnitt 23 ist hier ebenfalls segmentiert und weist nach radial innen bauchig ausgebildete Segmente 28 und 29 auf. Wie aus Fig. 5 ersichtlich ist, können insbesondere die Segmente 28 in Vertiefungen oder Nuten an der Mündung 30 des Setzgerätes angreifen und das Bau-Hilfselement 10 nun drehfest an diesem temporär fixieren. Wegen weiterer hier nicht explizit erwähnter Bezugszeichen wird vollumfänglich Bezug auf die vorangehende Beschreibung zu den Figuren 1 bis 3 genommen.

Es versteht sich, dass das Bau-Hilfselement 10 ebenfalls auch als Schalungsanschlag, Rohrschelle, Halteelement oder dgl. ausgebildet sein kann.

## Patentansprüche

1. Bau-Hilfselement mit einem von einem Basisteil (11) abragenden Hülsenteil (12), das eine Durchtrittsöffnung (13) und ein Widerlager (14) für ein Befestigungselement aufweist, und mit einem Halteabschnitt zum temporären fixieren des Bau-Hilfselementes (10) an der Mündung (30) eines Setzgerätes, wobei der Halteabschnitt die Durchtrittsöffnung (13) im Wesentlichen konzentrisch umgibt,
**dadurch gekennzeichnet,**
**dass** ein erster (21) und wenigstens ein weiterer Halteabschnitt (22, 23) vorgesehen sind, von denen der weitere Halteabschnitt (22, 23) von dem ersten Halteabschnitt (21) in radialer Richtung beabstandet ist.

2. Bau-Hilfselement nach Anspruch 1, **dadurch gekennzeichnet, dass** der erste Halteabschnitt (21) den weiteren Halteabschnitt (22, 23) in einer Richtung, die im Wesentlichen parallel zur Längsachse (15) der Durchtrittsöffnung (13) liegt, überragt.

3. Bau-Hilfselement nach Anspruch 1 oder 2, **dadurch gekennzeichnet, dass** der erste Halteabschnitt (21) in der Richtung, die im Wesentlichen parallel zur Längsachse (15) der Durchtrittsöffnung (13) liegt, mindestens 1,5 mal länger ist als der weiteren Halteabschnitt (22, 23).

4. Bau-Hilfselement nach einem der Ansprüche 1 bis 3, **dadurch gekennzeichnet, dass** der erste Halteabschnitt (21) an der äusseren Umfangsfläche (16) des Hülsenteils (12) angeordnet ist.

5. Bau-Hilfselement nach einem der Ansprüche 1 bis 4, **dadurch gekennzeichnet, dass** der erste Halteabschnitt (21) Rippen (24) aufweist, die im Wesentlichen parallel zur Längsachse (15) der Durchtrittsöffnung (13) verlaufen und an der Umfangsfläche (16) des Hülsenteils (12) angeordnet sind.

6. Bau-Hilfselement nach einem der Ansprüche 1 bis 3, **dadurch gekennzeichnet, dass** der weitere Halteabschnitt (22, 23) im Wesentlichen ringförmig ausgebildet ist.

7. Bau-Hilfselement nach einem der Ansprüche 1 bis 3 und 6, **dadurch gekennzeichnet, dass** der weitere Halteabschnitt (22, 23) aus mehreren Segmenten (25, 28, 29) besteht.

8. Bau-Hilfselement nach einem der Ansprüche 1 bis 3 und 6 bis 7, **dadurch gekennzeichnet, dass** radial aussen und/oder innen an dem weiteren Halteabschnitt (22, 23) Rippen (26, 27) angeordnet sind.

9. Bau-Hilfselement nach einem der Ansprüche 1 bis 8, **dadurch gekennzeichnet, dass** die weiteren Halteabschnitte (22, 23) wenigstens einen zweiten (22) und einen dritten Halteabschnitt (23) beinhalten, wobei der dritte Halteabschnitt (23) radial beabstandet ist von dem zweiten Halteabschnitt (22).

## Claims

1. Auxiliary construction element with a shell member (12) projecting from a base member (11), said shell member having a through opening (13) and a support (14) for a fastening element, and with a holder section for temporary fixing of the auxiliary construction element (10) at the mouth (30) of a setting device, wherein the holder section surrounds the through opening (13) substantially concentrically, **characterised in that** a first (21) and at least one further holder section (22, 23) are provided, of which the further holder section (22, 23) is spaced from the first holder section (21) in the radial direction.

2. Auxiliary construction element according to claim 1, **characterised in that** the first holder section (21) extends beyond the further holder section (22, 23) in a direction which lies substantially parallel to the longitudinal axis (15) of the through opening (13).

3. Auxiliary construction element according to claim 1 or 2, **characterised in that** the first holder section (21) is at least 1.5 times longer than the further holder section (22, 23) in the direction which lies substantially parallel to the longitudinal axis (15) of the through opening (13).

4. Auxiliary construction element according to one of the claims 1 to 3, **characterised in that** the first holder section (21) is arranged on the exterior peripheral surface (16) of the shell member (12).

5. Auxiliary construction element according to one of the claims 1 to 4, **characterised in that** the first holder section (21) has ribs (24) which run substantially parallel to the longitudinal axis (15) of the through opening (13) and are arranged on the peripheral surface (16) of the shell member (12).

6. Auxiliary construction element according to one of the claims 1 to 3, **characterised in that** the further holder section (22, 23) is constructed substantially ring-shaped.

7. Auxiliary construction element according to one of the claims 1 to 3 and 6, **characterised in that** the further holder section (22, 23) comprises a plurality of segments (25, 28, 29).

8. Auxiliary construction element according to one of the claims 1 to 3 and 6 to 7, **characterised in that** ribs (26, 27) are arranged radially externally and/or internally on a further holder section (22, 23).

9. Auxiliary construction element according to one of the claims 1 to 8, **characterised in that** the further holder sections (22, 23) comprise at least one second (22) and one third holder section (23), wherein the third holder section (23) is radially spaced from the second holder section (22).

## Revendications

1. Élément auxiliaire de construction comprenant une partie de manchon (12) qui dépasse d'une partie de base (11) et qui comporte une ouverture traversante (13) et un contre-appui (14) pour un élément de fixation, et comprenant une portion de retenue pour la fixation temporaire de l'élément auxiliaire de construction (10) à l'orifice débouchant (30) d'un outil de scellement, la portion de retenue entourant l'ouverture traversante (13) de manière sensiblement concentrique, **caractérisé en ce qu'**il est prévu une première portion de retenue (21) et au moins une portion de retenue supplémentaire (22, 23), la portion de retenue supplémentaire (22, 23) étant distante de la première portion de retenue (21) dans la direction radiale.

2. Élément auxiliaire de construction selon la revendication 1, **caractérisé en ce que** la première portion de retenue (21) dépasse de la portion de retenue supplémentaire (22, 23) dans une direction sensiblement parallèle à l'axe longitudinal (15) de l'ouverture traversante (13).

3. Élément auxiliaire de construction selon la revendication 1 ou 2, **caractérisé en ce que** la première portion de retenue (21) est plus longue que la portion de retenue supplémentaire (22, 23) d'au moins 1,5 fois dans la direction sensiblement parallèle à l'axe longitudinal (15) de l'ouverture traversante (13).

4. Élément auxiliaire de construction selon une des revendications 1 à 3, **caractérisé en ce que** la première portion de retenue (21) est disposée sur la surface périphérique extérieure (16) de la partie de manchon (12).

5. Élément auxiliaire de construction selon une des revendications 1 à 4, **caractérisé en ce que** la première portion de retenue (21) comporte des nervures (24) qui s'étendant sensiblement parallèlement à l'axe longitudinal (15) de l'ouverture traversante (13) et qui sont disposées sur la surface périphérique (16) de la partie de manchon (12).

6. Élément auxiliaire de construction selon une des revendications 1 à 3, **caractérisé en ce que** la portion de retenue supplémentaire (22, 23) est de conception sensiblement annulaire.

7. Élément auxiliaire de construction selon une des revendications 1 à 3 et 6, **caractérisé en ce que** la portion de retenue supplémentaire (22, 23) se compose de plusieurs segments (25, 28, 29).

8. Élément auxiliaire de construction selon une des revendications 1 à 3 et 6 à 7, **caractérisé en ce que** des nervures (26, 27) sont disposées radialement extérieurement et/ou intérieurement sur la portion de retenue supplémentaire (22, 23).

9. Élément auxiliaire de construction selon une des revendications 1 à 8, **caractérisé en ce que** les portions de retenue supplémentaires (22, 23) renferment au moins une deuxième (22) et une troisième portion de retenue (23), la troisième portion de retenue (23) étant distante radialement de la deuxième portion de retenue (22).
